# EUROPÄISCHE PATENTSCHRIFT

(11) **EP 3 112 058 B1**
(45) Veröffentlichungstag und Bekanntmachung des Hinweises auf die Patenterteilung: **04.09.2019**
(21) Anmeldenummer: 16177439.3
(22) Anmeldetag: 01.07.2016
(51) Int. Cl.: B22F 3/105, B29C 64/153, B33Y 30/00

(54) **VORRICHTUNG UND VERFAHREN ZUR GENERATIVEN FERTIGUNG**
DEVICE AND METHOD FOR ADDITIVE MANUFACTURING
DISPOSITIF ET PROCÉDÉ DE FABRICATION GÉNÉRATIVE

(30) Priorität: 03.07.2015 DE 102015008497
(43) Veröffentlichungstag der Anmeldung: 04.01.2017
(73) Patentinhaber: Premium AEROTEC GmbH, 86179 Augsburg (DE)
(72) Erfinder: Schroeder, Thorsten, 26349 Jaderberg (DE)
(74) Vertreter: Isarpatent

(56) Entgegenhaltungen:
- DE-A1-102013 221 387
- GB-A- 2 503 804
- US-A- 5 793 015
- US-A1- 2013 256 953

## Beschreibung

### Gebiet der Erfindung

Die Erfindung betrifft eine Vorrichtung und Verfahren zur generativen Fertigung von Bauteilen, insbesondere zur schichtweisen generativen Fertigung von Bauteilen, welche auf eine Grundplatte gedruckt werden.

### Hintergrund der Erfindung

Bei der schichtweisen generativen Fertigung kann Pulver unter Schutzgas sukzessive in dünnen Schichten auf eine Grundplatte aufgetragen und das Pulver der jeweiligen dünnen Schicht selektiv verfestigt werden, um dadurch ein dreidimensionales verfestigtes Bauteil zu erzeugen.

Bekannte Vorrichtungen und Verfahren zur generativen Fertigung sehen eine massive Grundplatte vor, auf welche das Pulver sukzessive in dünnen Schichten aufgetragen und verdichtet wird. Nach dem alle vorgesehenen Schichten aufgetragen und verdichtet und damit das Bauteil erzeugt worden sind, muss die Grundplatte entweder zerstört oder mittels z.B. Frästechnik, Erodiertechnik oder Sägetechnik behandelt werden, um das generierte Bauteil von der Grundplatte abzulösen. Nachteilig hieran ist, dass zusätzliche Maschinen benötigt werden und dass die Grundplatte ggfs. nicht erneut verwendet werden kann. Weiterhin können auf massiven Grundplatten Fehler im Anbindungsbereich von Bauteil und Grundplatte entstehen, welche bis zum Abriss oder Ablösen von Material des Bauteils und/oder der Grundplatte führen können.

Alternativ ist bekannt, eine Supportstruktur zwischen Bauteil und Trägerplatte anzubringen. Jedoch muss diese sehr massiv ausgelegt werden, da ansonsten durch entstehenden thermischen Verzug das Bauteil von der Trägerplatte abgerissen werden kann. Weiterhin ist durch das Anbringen einer derart massiven Supportstruktur ein Abtrennen des Bauteils von der Grundplatte von Hand nicht mehr möglich.

Die Druckschrift US 2013/0256953 A1 beschreibt ein Verfahren zur Herstellung eines Objekts durch ein Aufbringen einer Pulverschicht auf eine Arbeitsfläche. Das Pulver wird mittels eines Lasers gefestigt und erneute Pulverschichten aufgebracht.

### Zusammenfassung der Erfindung

Die Aufgabe der vorliegenden Erfindung besteht daher darin, eine Vorrichtung und ein Verfahren der eingangs genannten Art bereitzustellen, welche ein einfacheres Lösen des erzeugten Bauteils von der Grundplatte ermöglichen und dabei die Gefahr von Beschädigungen des Bauteils vermindern.

Die Aufgabe wird gelöst durch die Gegenstände der unabhängigen Patentansprüche. Bevorzugte Ausführungsformen sind Gegenstand der abhängigen Ansprüche.

Die erfindungsgemäße Vorrichtung zur generativen Fertigung von Bauteilen umfasst eine Grundplatte, welche eine Anbindungsfläche zum Auftragen und Verdichten von Pulver ausbildet, um das Bauteil zu fertigen. Die Grundplatte umfasst mehrere Bleche, wobei die Bleche derart geformt und nebeneinander angeordnet sind, dass die Anbindungsfläche der Grundplatte durch Seitenflächen der Bleche ausgebildet wird.

Mit anderen Worten basiert die Idee zur vereinfachten Abtrennung des Bauteils auf einer Vereinzelung der Grundplatte bzw. deren Auflagefläche, wobei die Bleche ein zusammenhängendes Blechpaket und damit die Grundplatte sowie deren Auflagefläche ausbilden. Die Grundplatte ist durch die mehreren Bleche, z.B. Stahlbleche, modular bzw. sektionell aufgebaut, wobei die Bleche beispielsweise identisch geformt sein können, das heißt sie weisen insbesondere gleiche Oberflächen und Materialstärken auf. Jeweils eine Seitenfläche jedes Blechs ist dabei derart neben einer Seitenfläche eines benachbarten Blechs angeordnet, dass die
Anbindungsfläche ausgebildet wird. Beispielsweise können die genannten Seitenflächen ohne Abstand zueinander in einer Ebene angeordnet sein, so dass eine kontinuierliche und ebene Anbindungsfläche der Grundplatte ausgebildet wird. Je nach Anwendungsfall und zu fertigendem Bauteil können durch die Bleche jedoch auch andere beliebige Formen von Anbindungsflächen ausgebildet werden. Jedes Blech bildet für sich betrachtet einen im Vergleich zur gesamten Auflagefläche geringen Teilbereich der Auflagefläche aus, wodurch ein gefertigtes Bauteil besonders leicht von dem Teilbereich der Auflagefläche und damit von dem Blech gelöst werden kann. Je kleiner ein durch die einzelnen Bleche jeweils gebildeter Teilbereich der Auflagefläche ist, desto einfacher kann ein gefertigtes Bauteil von diesem Teilbereich gelöst werden. Daher wurde die Anbindungsfläche für das zu fertigende Bauteil aus einem Blechpaket gestaltet.

Das Blechpaket, das heißt die Gesamtheit der Bleche, verhält sich während der Fertigung eines Bauteils analog zu einer massiven Grundplatte, bietet jedoch den Vorteil, dass die Bleche nach dem Druckprozess einzeln nacheinander von Hand von dem gefertigten bzw. generierten Bauteil gelöst und entfernt werden können. Weiterhin muss die Grundplatte nicht nach einer Fertigung eines Bauteils zerstört werden, sondern kann zur Fertigung weiterer Bauteile erneut verwendet werden. Weiterhin kann auf Frästechnik, Erodiertechnik oder Sägetechnik sowie zugehörigen apparativen Aufwand zum Lösen des Bauteils von der Grundplatte verzichtet werden. Außerdem lässt sich die Nachbearbeitungszeit für das gefertigte Bauteil verkürzen, wodurch sich die Zykluszeit reduzieren lässt. Durch die mögliche Mehrfachverwendung der Grundplatte können auch Kostenreduzierungen erzielt werden und die Bleche lassen sich leicht in bestehende Systeme implementieren. Dabei wird die Gefahr von Anbindungsabrissen des Bauteils von der Grundplatte vermindert und dadurch die Prozesssicherheit gesteigert.

Die erfindungsgemäße Vorrichtung ist dazu eingerichtet, eine definierte Spannkraft zwischen den Blechen zu erzeugen, wobei die Spannkraft ein Nachgeben einzelner Bleche während des Auftragens und Verdichtens des Pulvers auf der Anbindungsfläche zulässt. Das Nachgeben kann dabei in einer Richtung zugelassen werden, welche identisch mit einer Richtung ist, in welcher ein Verdichtungsdruck zur Verdichtung des Pulvers zur Herstellung eines Bauteils auf die Anbindungsfläche wirkt. Mit anderen Worten ist während der Fertigung bzw. Generierung eines Bauteils die Grundplatte nachgiebig, bzw. die Bleche, welche die Grundplatte ausbilden, sind nachgiebig.

Durch die definierte Spannkraft werden die Bleche derart zusammengehalten, dass sich ihr seitlicher Abstand zueinander nicht verändert. Allerdings ist die definierte Spannkraft derart bemessen, dass die Seitenflächen der jeweiligen Bleche, welche die Anbindungsfläche ausbilden, zueinander verschiebbar sind. Somit kann die Anbindungsfläche während der Fertigung eines Bauteils auf lokal auftretende Drücke reagieren. Über die Spannkraft kann kontrolliert werden, ab welcher Kraft die Bleche sich verschieben. Diese Ausführungsform ermöglicht, die Gefahr von Beschädigungen des Bauteils durch unerwünschte Ablösungen von Material des Bauteils weiter zu vermindern.

In diesem Zusammenhang weist die Vorrichtung eine Schraubenverbindung auf, welche dazu eingerichtet ist, die definierte Spannkraft zu erzeugen. Die Schraubenverbindung weist einen Toleranzbereich auf, um ein Verschieben der Bleche zuzulassen. Die Schraubenverbindung kann z.B. eine Stange umfassen, welche durch miteinander fluchtende Bohrungen in die Platten gesteckt ist. Ein Durchmesser der Bohrungen kann dabei geringfügig größer sein als ein Durchmesser der Stange, wodurch der Toleranzbereich gebildet wird. Mittels eines Gewindes der Stange, sowie zwei Muttern und ggfs. Unterlegscheiben, welche an den äußeren Blechen anliegen, kann das Blechpaket definiert verspannt werden. Eine Verschiebung der Bleche kann dadurch ermöglicht werden,
dass die Bleche derart durch die Schrauben verspannt werden, dass oberhalb der Stange ein Freiraum zwischen Stange und Bohrung gebildet wird, wobei der Freiraum
durch die Durchmesser-Differenz begrenzt ist. Um eine besonders gleichmäßig verteilte Kraft in die Bleche einzuleiten, können auch mehrere solcher Schraubenverbindungen, besonders bevorzugt in gleichem Abstand zueinander, vorgesehen werden.

Weiterhin kann die Vorrichtung Mittel zum Niederhalten aufweisen, welche dazu eingerichtet sind, ein Nachgeben einzelner Bleche während des Auftragens und Verdichtens des Pulvers auf der Anbindungsfläche zu verhindern. Dies ist insbesondere dann vorteilhaft, falls keine Verschiebung der Bleche gewünscht ist. Dies könnte mit einer entsprechend hohen Spannkraft sichergestellt werden. Alternativ, oder falls die Spannkraft nicht ausreichen sollte können die Bleche jedoch auch mechanisch mit den genannten Mitteln zum Niederhalten, z.B. Klammern, auf einer Ebene in Zwangslage gehalten werden.

Ein erfindungsgemäßes Verfahren zur generativen Fertigung eines Bauteils bzw. von Bauteilen beginnt mit einem Bereitstellen einer vorstehend beschriebenen Vorrichtung zur generativen Fertigung von Bauteilen. Die Vorrichtung umfasst insbesondere eine Grundplatte, welche eine Anbindungsfläche zum Auftragen und Verdichten von Pulver ausbildet, wobei die Grundplatte mehrere Bleche umfasst. Die Bleche sind derart geformt und nebeneinander angeordnet, dass die Anbindungsfläche der Grundplatte durch Seitenflächen der Bleche ausgebildet wird. Es folgt ein Erzeugen des Bauteils durch sukzessives Auftragen und Verdichten von Pulver in dünnen Schichten auf der Anbindungsfläche. Danach werden die Bleche einzeln oder gruppenweise von dem erzeugten Bauteil getrennt bzw. abgelöst. Bei diesem Verfahren verhalten sich die Bleche analog zu einer massiven Bauteilplatte, bieten jedoch den Vorteil, dass die Bleche nach dem Druckprozess einzeln oder gruppenweise nacheinander per Hand von dem gefertigten Bauteil entfernt werden können. Bezüglich weiterer Vorteile und vorteilhafter Ausführungsformen dieses erfindungsgemäßen Verfahrens wird zur Vermeidung von Wiederholungen auf die vorstehenden Ausführungen im Zusammenhang mit der erfindungsgemäßen Vorrichtung verwiesen.

Nach diesem Verfahren kann weiterhin eine Opferschicht durch Auftragen und Verdichten von Pulver auf der Anbindungsfläche ausgebildet werden. Danach wird das Bauteil durch sukzessives Auftragen und Verdichten von Pulver in dünnen Schichten auf der Opferschicht erzeugt. Und es erfolgt ein einzelnes oder gruppenweises Abtrennen der Bleche von der Opferschicht.

Dieses Verfahren kommt besonders vorteilhaft dann zum Einsatz, wenn ein Verschieben der Bleche gewünscht ist und eine Vorrichtung bereitgestellt wird, welche mittels einer Schraubenverbindung dazu eingerichtet ist, eine definierte Spannkraft zwischen den Blechen zu erzeugen, wobei die Spannkraft ein Nachgeben einzelner Bleche während des Auftragens und Verdichtens des Pulvers auf der Anbindungsfläche zulässt. In diesem Fall kann die Opferschicht, welche unterhalb des zu fertigenden Bauteils und oberhalb der Anbindungsfläche generiert wird, eine Auslenkung bzw. Verschiebung der Bleche kompensieren. Die Opferschicht kann derart erzeugt werden, dass einerseits auf ihr die Fertigung eines Bauteils mit Pulver möglich ist und andererseits eine nur sehr schwache Verbindung zu den Blechen generiert wird.

Die Opferschicht muss nach dem Fertigen des Bauteils von diesem entfernt werden. Dieses Verfahren ermöglicht, die Eigenspannungen während der Fertigung des Bauteils zu reduzieren. Ebenfalls kann die Gefahr, dass gefertigte Bauteile sich von der Grundplatte unbeabsichtigt ablösen, vermindert werden, da ein Teil der entstehenden Kräfte bzw. Drücke durch das nachgiebige Blechpaket kompensiert wird.

Das Erzeugen der Opferschicht kann vorteilhaft derart erfolgen, dass die Opferschicht eine abgerundete Auflagefläche aufweist, welche an der Anbindungsfläche anhaftet. Diese Ausführungsform leistet einen Beitrag, eine ausreichend feste Verbindung zwischen Opferschicht und den Blechen zu gewährleisten, andererseits jedoch auch ein Ablösen der Opferschicht von den Platten per Hand zu ermöglichen.

Ein ähnlicher Vorteil kann entstehen, wenn das Erzeugen der Opferschicht derart erfolgt, dass die Opferschicht eine Gitterstruktur aufweist, wobei eine Kombination mit einer vorgenannten abgerundeten Anbindungsfläche besonders bevorzugt ist.

### Kurze Beschreibung der Figuren

Im Folgenden werden Ausführungsbeispiele der Erfindung anhand der Zeichnung näher erläutert. Hierbei zeigt:
Im Folgenden werden Ausführungsbeispiele der Erfindung anhand der Zeichnung näher erläutert. Hierbei zeigt:
- Fig. 1: eine perspektivische Ansicht eines Ausführungsbeispiels einer erfindungsgemäßen Vorrichtung mit einer Schraubenverbindung,
- Fig. 1a, b: einen vergrößerten Teil der Vorrichtung nach Fig. 1 in einer Seitenansicht,
- Fig. 2a: die Vorrichtung nach Fig. 1 ohne Schraubenverbindung während der Fertigung eines Bauteils nach einem Ausführungsbeispiel eines erfindungsgemäßen Verfahrens,
- Fig. 2b: einen schematischen Ablaufplan des Verfahrens nach Fig. 2a,
- Fig. 3a: die Vorrichtung nach Fig. 1 ohne Schraubenverbindung während der Fertigung eines Bauteils nach einem Ausführungsbeispiel eines nicht erfindungsgemäßen Verfahrens,
- Fig. 3b: einen schematischen Ablaufplan des Verfahrens nach Fig. 3a,
- Fig. 4: die Vorrichtung nach Fig. 1 ohne Schraubenverbindung während der Fertigung eines Bauteils nach einem weiteren Ausführungsbeispiel eines nicht erfindungsgemäßen Verfahrens und
- Fig. 5: eine perspektivische Ansicht eines weiteren Ausführungsbeispiels einer erfindungsgemäßen Vorrichtung mit vier Schraubenverbindungen und einer Niederhaltevorrichtung.

In der Zeichnung sind gleiche oder ähnliche Elemente mit dem gleichen Bezugszeichen versehen. Die Darstellungen in den Figuren sind lediglich schematisch skizziert und nicht maßstabsgetreu.

### Detaillierte Beschreibung von Ausführungsbeispielen

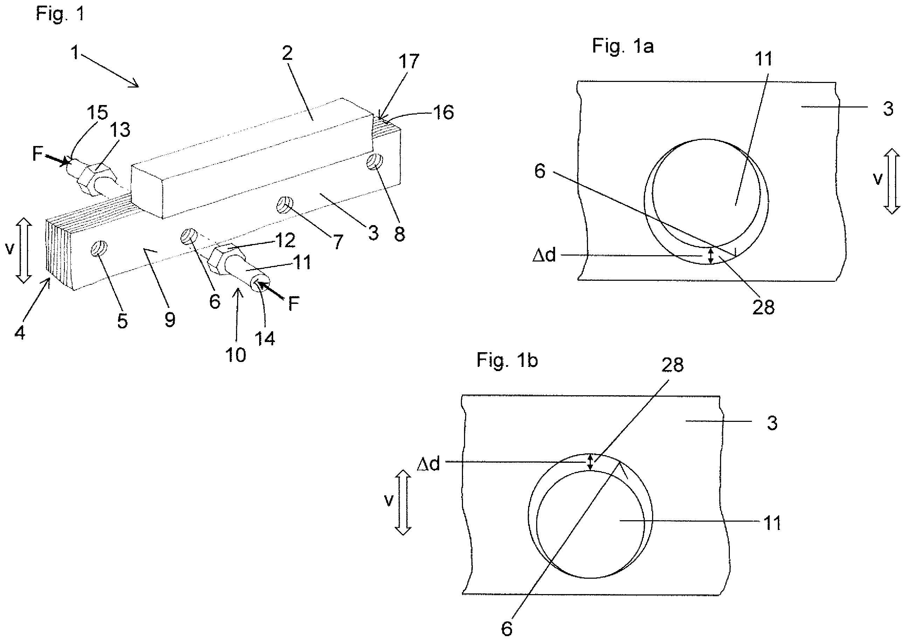

Fig. 1 zeigt eine Vorrichtung 1 und ein Bauteil 2, welches durch ein schichtweises generatives Fertigungsverfahren hergestellt worden ist. Die Vorrichtung 1 umfasst insgesamt acht identische Bleche 3, welche nebeneinander und aneinander anliegend angeordnet sind und aus dem gleichen Material bestehen wie das gefertigte Bauteil 2. Die Bleche 3 bilden gemeinsam eine Grundplatte 4 der Vorrichtung 1 aus, wobei aus Gründen der besseren Übersicht lediglich eines der Bleche 3 mit einem Bezugszeichen versehen ist. Jedes der Bleche 3 weist insgesamt vier gerade Bohrungen 5 bis 8 auf, welche gleichmäßig entlang der Oberfläche 9 des jeweiligen Blechs 3 verteilt sind.

Die Bleche 3 werden mittels einer Schraubenverbindung 10 zusammengehalten und können gegeneinander verspannt werden. Dazu weist die Schraubenverbindung 10 eine zylindrische Stange11 sowie zwei identische Muttern 12 und 13 auf. Die Stange 11 weist ein nicht dargestelltes, zu den Muttern 12 und 13 passendes Außengewinde auf und kann durch miteinander fluchtende Bohrungen 6 der Bleche 3 geschoben werden.

Wie aus Fig. 1a und Fig. 1b ersichtlich ist der Außendurchmesser der Stange 11 kleiner als der Innendurchmesser der Bohrungen 6 der Bleche 3. Dadurch wird ein Toleranzbereich der Schraubenverbindung 10 erzeugt. Der Toleranzbereich ermöglicht die Schaffung eines Freiraums 28 zwischen der Stange 11 und den Bohrungen 6 in der Größe einer Durchmesser-Differenz Δd zwischen dem Außendurchmesser der Stange 11 und dem Innendurchmesser der Bohrungen 6. Die Muttern 12 und 13 können über entgegengesetzte Stirnseiten 14 bzw. 15 der Stange 11 soweit auf die Stange 11 aufgeschraubt werden, bis sie in Anlage mit einander abgewandten Oberseiten 9 der äußeren Bleche 3 kommen. Durch anschließendes Kontern der beiden Muttern 12, 13 kann dann eine definierte Spannkraft F der Schraubenverbindung 10 eingestellt werden, welche beidseitig auf die Oberflächen 9 der Bleche 3 wirkt und die Bleche 3 dadurch verspannt. Ohne eine Verspannung durch die Muttern 12 und 13 können die Bleche 3 mit ihren Bohrungen 6 aufgrund der Schwerkraft auf einem oberen Bereich der Stange 11 aufliegen (Fig. 1a). Alternativ kann die Stange 11 vor dem Verspannen derart in den Bohrungen 6 der Bleche 3 positioniert werden, dass ein unterer Bereich der Stange 11 in Anlage mit den Bohrungen 6 der Bleche 3 gelangt (Fig. 1b) und ein Freiraum 28 oberhalb der Stange 11 geschaffen wird. Gemäß der Alternative nach Fig. 1b können die Bleche 3 in vertikaler Richtung v nach unten verschoben werden, und zwar um die Durchmesser-Differenz Δd.

Die durch Fig. 1 explosionsartig dargestellte Schraubenverbindung 10, welche gemäß Fig. 1 in den zweiten Bohrungen 6 von links vorgesehen ist, kann in gleicher Weise auch in den anderen Bohrungen 5, 7 und 8 der Bleche 3 vorgesehen sein, was aus Gründen der Übersichtlichkeit jedoch nicht dargestellt ist.

Die Bleche 3 umfassen jeweils zwei einander gegenüberliegende Oberflächen 9 und vier Seitenflächen, wobei die in Fig. 1 oben dargestellten Seitenflächen 16 der Bleche 3 in einer gemeinsamen Ebene angeordnet sind und gemeinsam eine Anbindungsfläche 17 der Grundplatte 4 ausbilden. Auf der Anbindungsfläche 17 wurden sukzessive Schichten aus Pulver aufgetragen und verdichtet, woraus das durch Fig. 1 gezeigte quaderförmige Bauteil 2 entstanden ist, welches an der Anbindungsfläche 17 anhaftet, wobei die einzelnen Schichten des Bauteils 2 in Fig. 1 nicht gezeigt sind.

Die Spannkraft F der Schraubenverbindung 10 ist in dem Fig. 1 dargestellten Beispiel derart eingestellt, dass ein Nachgeben einzelner Bleche 3 unter Druck auf die Anbindungsfläche 17 während der Fertigung des Bauteils 2 zu einer Verschiebung einzelner Bleche 3 in vertikaler Richtung v an entsprechenden Stellen der Anbindungsfläche 17 führen konnte.

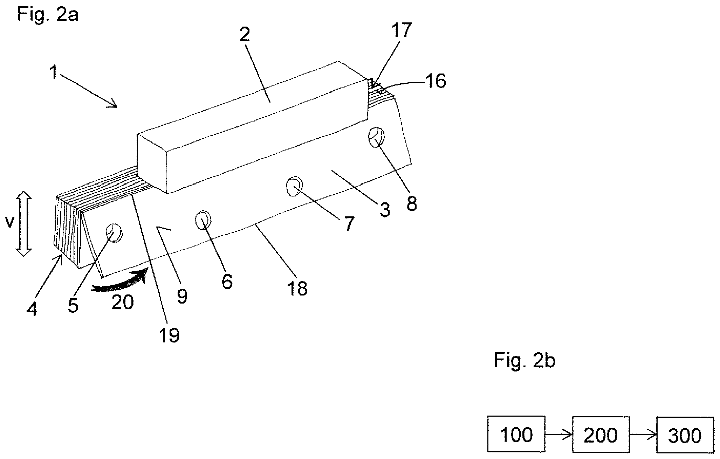

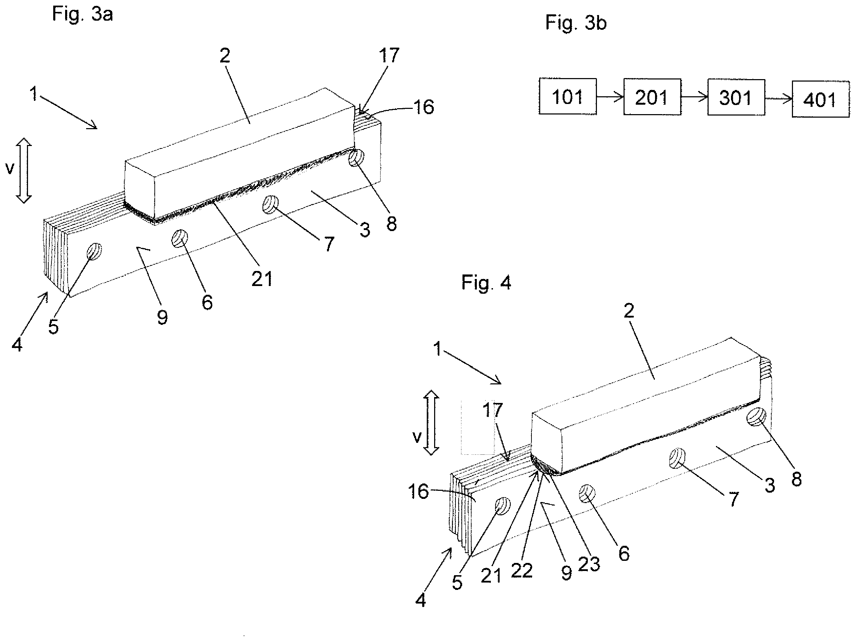

Fig. 2a zeigt die Vorrichtung nach Fig. 1 ohne Schraubenverbindung 10, welche gemäß einem Ausführungsbeispiel eines erfindungsgemäßen Verfahrens nach Fig. 2b in einem ersten Verfahrensschritt 100 bereitgestellt worden ist. Anschließend wurde in einem zweiten Verfahrensschritt 200 ein Bauteil 2 durch sukzessives Auftragen und Verdichten von Pulver in dünnen Schichten auf der Anbindungsfläche 17 der Grundplatte 4 erzeugt, wobei die einzelnen Schichten in Fig. 2 nicht mehr zu erkennen sind. In einem nachfolgenden Schritt 300 wurde ein unterer Rand 18 des in Fig. 2 vorne dargestellten Blechs 3 per Hand um ca. 40° um einen oberen Rand 19 des Blechs 3 nach vorne gedreht, was durch den Pfeil 20 verdeutlicht wird. Dadurch wurde das vordere Blech 3 von dem Bauteil 2 gelöst, ohne dass das Blech 3 oder das Bauteil 2 durch eine ungewollte Materialablösung beschädigt wurden. Das Lösen der übrigen sieben Bleche 3 erfolgte anschließend einzeln auf die gleiche Weise wie beim vorderen Blech 3 (nicht durch Fig. 2a gezeigt), so dass alle Bleche 3 beschädigungsfrei von dem Bauteil 2 gelöst wurden. Fig. 3a zeigt die Vorrichtung nach Fig. 1 ohne Schraubenverbindung 10, welche gemäß einem Ausführungsbeispiel eines nicht erfindungsgemäßen Verfahrens nach Fig. 3b in einem ersten Verfahrensschritt 101 bereitgestellt worden ist. Durch Auftragen und Verdichten von Pulver auf der Anbindungsfläche 17 wurde in einem zweiten Verfahrensschritt 201 eine massive Opferschicht 21 erzeugt. Die Opferschicht 21 bildet einen Bereich unterhalb eines zu fertigenden Bauteils 2 aus und kompensiert eine Auslenkung bzw. eine Verschiebung der Bleche 3 in vertikaler Richtung v während der Herstellung des Bauteils 2. In einem folgenden Verfahrensschritt 301 wurde das Bauteil 2 durch sukzessives Auftragen und Verdichten von Pulver in dünnen Schichten auf der Opferschicht 21 erzeugt, wobei die einzelnen Schichten in Fig. 3a nicht gezeigt sind. Anschließend erfolgte in einem weiteren Verfahrensschritt 401 ein einzelnes Abtrennen der Bleche 3 von der Opferschicht 21. Das Abtrennen erfolgte dabei im Prinzip wie durch Fig. 2a gezeigt, allerdings mit dem Unterschied, dass die Bleche 3 nicht direkt von dem gefertigten Bauteil 2, sondern von der Opferschicht 21 gelöst wurden.

Das nicht erfindungsgemäße Ausführungsbeispiel nach Fig. 4 unterscheidet sich von dem nach Fig. 3 durch das Erzeugen der Opferschicht 21, welche eine abgerundete Auflagefläche 22 aufweist, welche an der Anbindungsfläche 17 der Grundplatte 4 der Vorrichtung 1 anhaftet und im Querschnitt eine Gitterförmige Struktur 23 aufweist.

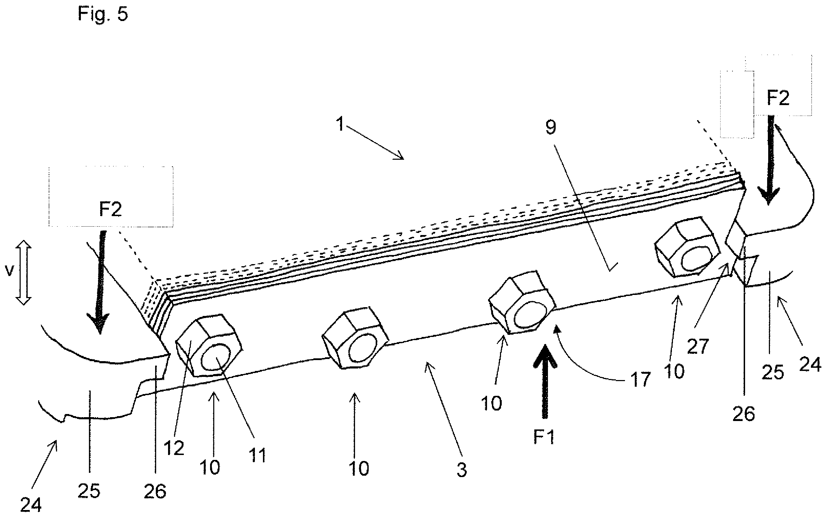

Das durch Fig. 5 gezeigte Ausführungsbeispiel einer erfindungsgemäßen Vorrichtung 1 umfasst vier identische Schraubenverbindungen 10, welche im Prinzip gleich aufgebaut sind, wie die Schraubenverbindungen 10 gemäß Fig. 1. Weiterhin umfasst die Vorrichtung 1 Mittel zum Niederhalten 24, welche zwei Klammern 25 umfassen, welche jeweils einen Schulterbereich 26 aufweisen. Die Klammern 25 sind an zwei entgegengesetzten Seitenflächen der Bleche 3 angeordnet, wobei sich jeweils ein Absatz 27 der Bleche 3 an einem der Schulterbereiche 26 der Klammer 25 abstützt. Wenn eine Kraft F1 auf die Anbindungsfläche 17 wirkt, z.B. während der Fertigung eines durch Fig. 5 nicht gezeigten Bauteils auf der Anbindungsfläche 17, so erzeugen die Mittel zum Niederhalten 24 entsprechende Gegenkräfte F2, wodurch verhindert wird, dass sich die Bleche 3 in vertikaler Richtung v verschieben.

## Patentansprüche

1. Vorrichtung (1) zur generativen Fertigung von Bauteilen (2),
umfassend eine Grundplatte (4), welche eine Anbindungsfläche (17) zum Auftragen und Verdichten von Pulver ausbildet, um das Bauteil (2) zu fertigen,
wobei die Grundplatte (4) mehrere Bleche (3) umfasst,
wobei die Bleche (3) derart geformt und nebeneinander angeordnet sind,
dass die Anbindungsfläche (17) der Grundplatte (4) durch Seitenflächen (16) der Bleche (3) ausgebildet wird,
**dadurch gekennzeichnet, dass**
die Vorrichtung (1) dazu eingerichtet ist, eine definierte Spannkraft (F) zwischen den Blechen (3) zu erzeugen, wobei die Spannkraft ein Nachgeben einzelner Bleche (3) während des Auftragens und Verdichtens des Pulvers auf der Anbindungsfläche (17) zulässt, und
die Vorrichtung (1) eine Schraubenverbindung (10) aufweist, welche dazu eingerichtet ist, die definierte Spannkraft zu erzeugen.

2. Vorrichtung (1) nach Anspruch 1, **dadurch gekennzeichnet, dass** die Vorrichtung (1) Mittel zum Niederhalten (24) aufweist, welche dazu eingerichtet sind, ein Nachgeben einzelner Bleche (3) während des Auftragens und Verdichtens des Pulvers auf der Anbindungsfläche (17) zu verhindern.

3. Verfahren zur generativen Fertigung eines Bauteils (2), umfassend die Verfahrensschritte:
(100) Bereitstellen einer Vorrichtung (1) zur generativen Fertigung von Bauteilen (2), umfassend eine Grundplatte (4), welche eine Anbindungsfläche (17) zum Auftragen und Verdichten von Pulver ausbildet, um das Bauteil (2) zu fertigen, wobei die Grundplatte (4) mehrere Bleche (3) umfasst, wobei die Bleche (3) derart geformt und nebeneinander angeordnet sind, dass die Anbindungsfläche (17) der Grundplatte (4) durch Seitenflächen (16) der Bleche (3) ausgebildet wird, wobei die Vorrichtung (1) dazu eingerichtet ist, eine definierte Spannkraft (F) zwischen den Blechen (3) zu erzeugen, wobei die Spannkraft ein Nachgeben einzelner Bleche (3) während des Auftragens und Verdichtens des Pulvers auf der Anbindungsfläche (17) zulässt, und
die Vorrichtung (1) eine Schraubenverbindung (10) aufweist, welche dazu eingerichtet ist, die definierte Spannkraft zu erzeugen,
(200) Erzeugen des Bauteils (2) durch sukzessives Auftragen und Verdichten von Pulver in dünnen Schichten auf der Anbindungsfläche (17) und
(300) einzelnes oder gruppenweises Abtrennen der Bleche (3) von dem erzeugten Bauteil (2).

4. Verfahren nach Anspruch 3, bei welchem ein Erzeugen (201) einer Opferschicht (21) durch Auftragen und Verdichten von Pulver auf der Anbindungsfläche (17);
das Erzeugen (301) des Bauteils (2) durch sukzessives Auftragen und Verdichten von Pulver in dünnen Schichten auf der Opferschicht (21); und das einzelne oder gruppenweise Abtrennen (401) der Bleche (3) von der Opferschicht (21) erfolgt.

5. Verfahren nach Anspruch 4, **dadurch gekennzeichnet, dass** das Erzeugen der Opferschicht (21) derart erfolgt, dass die Opferschicht (21) eine abgerundete Auflagefläche (22) aufweist, welche an der Anbindungsfläche (17) anhaftet.

6. Verfahren nach Anspruch 4 oder 5, **dadurch gekennzeichnet, dass** das Erzeugen der Opferschicht (21) derart erfolgt, dass die Opferschicht (21) eine Gitterstruktur (23) aufweist.

## Claims

1. Device (1) for the generative manufacture of components (2), comprising a base plate (4) which provides a seating surface (17) for the application and compaction of powder in order to manufacture the component (2), wherein the base plate (4) comprises a plurality of metal sheets (3), said metal sheets (3) being shaped and arranged adjacent to one another such that the seating surface (17) of the base plate (4) is provided by means of lateral faces (16) of the metal sheets (3), **characterised in that** the device (1) is constructed to generate a defined tension force (F) between the metal sheets (3), said tension force allowing individual metal sheets (3) to yield during the application and compaction of the powder on the seating surface (17), and the device (1) has a screw connection (10) for generating the defined tension force.

2. Device (1) according to claim 1, **characterised in that** the device (1) has means of holding down (24) to prevent individual metal sheets (3) from yielding during the application and compaction of the powder on the seating surface (17).

3. Process for the generative manufacture of a component (2), comprising the process steps:
(100)provision of a device (1) for the generative manufacture of components (2), comprising a base plate (4) which provides a seating surface (17) for the application and compaction of powder in order to manufacture the component (2), wherein the base plate (4) comprises a plurality of metal sheets (3), said metal sheets (3) being shaped and arranged adjacent to one another such that the seating surface (17) of the base plate (4) is provided by means of lateral faces (16) of the metal sheets (3), the device (1) being constructed to generate a defined tension force (F) between the metal sheets (3), said tension force allowing individual metal sheets (3) to yield during the application and compaction of the powder on the seating surface (17), and
the device (1) has a screw connection (10) for the generation of the defined tension force,
(200)generation of the component (2) by means of the successive application and compaction of powder in thin layers on the seating surface (17) and
(300)individual or groupwise detaching of the metal sheets (3) from the generated component (2).

4. Process according to claim 3 for the generation (201) of a sacrificial coat (21) comprising the application and compaction of powder on the seating surface (17); the generation (301) of the component (2) by the successive application and compaction of powder in thin layers on to the sacrificial coat (21); and the individual or groupwise detaching (401) of the metal sheets (3) from the sacrificial coat (21).

5. Process according to claim 4, **characterised in that** the sacrificial coat (21) is generated so as to have a rounded contact surface (22) which adheres to the seating surface (17) .

6. Process according to claim 4 or 5, **characterised in that** the sacrificial coat (21) is generated such that the sacrificial coat (21) has a lattice structure (23).

## Revendications

1. Dispositif (1) de fabrication générative d'éléments structuraux (2),
comprenant une plaque de base (4), qui forme une surface de liaison (17) pour l'application et la compression de poudre, afin de fabriquer l'élément structural (2),
la plaque de base (4) comprenant plusieurs tôles (3),
les tôles (3) étant formées et disposées les unes à côté des autres de telle manière que la surface de liaison (17) de la plaque de base (4) est formée par des surfaces latérales (16) des tôles (3),
**caractérisé en ce que**
le dispositif (1) est conçu pour générer une force de serrage (F) définie entre les tôles (3), la force de serrage permettant un fléchissement de tôles (3) individuelles pendant l'application et la compression de la poudre sur la surface de liaison (17), et
le dispositif (1) comportant un assemblage à vis (10), qui est conçu pour générer la force de serrage définie.

2. Dispositif (1) selon la revendication 1, **caractérisé en ce que** le dispositif (1) comporte des moyens de maintien (24), qui sont conçus pour empêcher un fléchissement de tôles (3) individuelles pendant l'application et la compression de la poudre sur la surface de liaison (17).

3. Procédé de fabrication générative d'un élément structural (2), comprenant les étapes de procédé :
(100)mise à disposition d'un dispositif (1) de fabrication générative d'éléments structuraux (2), comprenant une plaque de base (4), qui forme une surface de liaison (17) pour l'application et la compression de poudre, afin de fabriquer l'élément structural (2), la plaque de base (4) comprenant plusieurs tôles (3), les tôles (3) étant formées et disposées les unes à côté des autres de telle manière que la surface de liaison (17) de la plaque de base (4) est formée par des surfaces latérales (16) des tôles (3), le dispositif (1) étant conçu pour générer une force de serrage (F) définie entre les tôles (3), la force de serrage permettant un fléchissement de tôles (3) individuelles pendant l'application et la compression de la poudre sur la surface de liaison (17), et
le dispositif (1) comportant un assemblage à vis (10), qui est conçu pour générer la force de serrage définie,
(200)génération de l'élément structural (2) par application et compression successive de poudre en fines couches sur la surface de liaison (17) et
(300)séparation individuelle ou groupée des tôles (3) d'avec l'élément structural (2) généré.

4. Procédé selon la revendication 3, dans lequel une génération (201) d'une couche sacrificielle (21) par application et compression de poudre sur la surface de liaison (17) ; la génération (301) de l'élément structural (2) par application et compression successive de poudre en fines couches sur la couche sacrificielle (21) ; et la séparation (401) individuelle ou groupée des tôles (3) d'avec la couche sacrificielle (21) sont effectuées.

5. Procédé selon la revendication 4, **caractérisé en ce que** la génération de la couche sacrificielle (21) est effectuée de telle manière que la couche sacrificielle (21) comporte une surface d'appui (22) arrondie, qui adhère à la surface de liaison (17).

6. Procédé selon la revendication 4 ou 5, **caractérisé en ce que** la génération de la couche sacrificielle (21) est effectuée de telle manière que la couche sacrificielle (21) comporte une structure en treillis (23).
